# EUROPÄISCHE PATENTANMELDUNG

(11) **EP 3 290 254 A1**
(43) Veröffentlichungstag der Anmeldung: **07.03.2018**
(21) Anmeldenummer: 16186575.3
(22) Anmeldetag: 31.08.2016
(51) Int. Cl.: B60L 1/00, H02M 3/335, H02J 7/34

(54) **BIDIREKTIONALER BORDNETZUMRICHTER UND VERFAHREN ZU DESSEN BETRIEB**

(71) Anmelder: Siemens Aktiengesellschaft, 80333 München (DE)
(72) Erfinder: Echkilev, Nikolaj, 41542 Dormagen (DE); Wellner, Andreas, 47803 Krefeld (DE); Wu, Xiao Qiang, 47804 Krefeld (DE)

(57) **Zusammenfassung**

Die Erfindung ist ein bidirektionaler Bordnetzumrichter (10) mit einer Eingangsseite zur Zuführung einer Eingangsspannung, einem ersten Strompfad (14) zu zumindest einem anschließbaren Verbraucher (16) und einem zum ersten Strompfad (14) parallelen zweiten Strompfad (18) von und zu einer Batterie (20) sowie mit einem Ausgangsstromrichter (80) im zweiten Strompfad (18), wobei der Ausgangsstromrichter (80) bei einem Ladebetrieb des Bordnetzumrichters (10) zum Laden der Batterie (20) als Gleichrichter und bei einem Rückspeisebetrieb zur Energieversorgung zumindest einzelner Verbraucher (16) als Wechselrichter betreibbar ist, wobei der erste und zweite Strompfad (14,18) von einer Sekundärseite eines Übertragers (72) ausgehen, wobei sich der Ausgangsstromrichter (80) im zweiten Strompfad (18) im Anschluss an den Übertrager (72) befindet und wobei beim Rückspeisebetrieb mittels des Ausgangsstromrichters (80) eine Wechselspannung generierbar ist, welche mittels des Übertragers (72) in den ersten Strompfad (14) und zu zumindest einem dort angeschlossenen Verbraucher (16) gelangt.

## Beschreibung

Die Erfindung betrifft einen zum Einsatz in einem Fahrzeug, insbesondere in einem Schienenfahrzeug, also im Bahnbetrieb, vorgesehenen bidirektionalen Bordnetzumrichter, welcher an unterschiedlichen Bahnnetz-Eingangsspannungen (z.B. DC 750V-, DC 1500V-, DC 3000V-, AC 1000V-, AC 1500V- und AC 3000V-) verwendbar ist.

Bidirektionale Bordnetzumrichter in einem Schienenfahrzeug sind in der Lage, sowohl aus der sogenannten Fahrdrahtspannung wie auch aus dem batteriegespeisten DC-Bordnetz die jeweiligen Verbraucher (1AC Verbraucher und 3AV Verbraucher) unterbrechungsfrei mit elektrischer Energie zu versorgen.

Solche bidirektionale Bordnetzumrichter sind in mittelfrequenter und niederfrequenter Ausführung bekannt. Für die Energieflussrichtung aus der Batterie benötigen diese allerdings zusätzliche Stromrichter und Bauteile. Dies führt zu erheblichem zusätzlichem Gewicht, zusätzlichem Platzbedarf und nicht zuletzt zu zusätzlichen Kosten.

Eine Aufgabe der vorliegenden Erfindung besteht demnach darin, einen zum Einsatz in einem Fahrzeug, insbesondere zum Einsatz im Bahnbetrieb bestimmten bidirektionalen Bordnetzumrichter anzugeben, welcher diese Nachteile vermeidet oder zumindest reduziert.

Diese Aufgabe wird erfindungsgemäß mittels eines insbesondere zum Einsatz im Bahnbetrieb bestimmten bidirektionalen Bordnetzumrichters mit den Merkmalen des Anspruchs 1 sowie mittels eines Verfahrens zum Betrieb eines solchen bidirektionalen Bordnetzumrichters mit den Merkmalen des parallelen unabhängigen Verfahrensanspruchs gelöst.

Bei einem bidirektionalen Bordnetzumrichter, dem an einer Eingangsseite eine externe Eingangsspannung, beim Bahnbetrieb die Fahrdrahtspannung, zuführbar ist, und der einen ersten Strompfad zu zumindest einem anschließbaren Verbraucher sowie einen zum ersten Strompfad parallelen, zweiten Strompfad von und zu zumindest einer anschließbaren Batterie umfasst, ist dabei Folgendes vorgesehen:
Der bidirektionale Bordnetzumrichter umfasst einen Ausgangsstromrichter im zweiten Strompfad von und zur zumindest einer anschließbaren Batterie.

Eine erste Betriebsart des bidirektionalen Bordnetzumrichters ist ein Ladebetrieb zum Laden der zumindest einen Batterie mittels der externen Eingangsspannung. Eine zweite Betriebsart des bidirektionalen Bordnetzumrichters ist ein Rückspeisebetrieb zur Energieversorgung zumindest einzelner Verbraucher mittels der zumindest einen Batterie und der dort abgreifbaren Batteriespannung.

Beim Ladebetrieb ist der Ausgangsstromrichter als Gleichrichter betreibbar und fungiert beim Ladebetrieb als Gleichrichter. Bei einer Halbleiterschalter und antiparallele Freilaufdioden umfassenden Ausführungsform des Ausgangsstromrichters sind beim Ladebetrieb die Halbleiterschalter des Ausgangsstromrichters sperrbar und werden beim Ladebetrieb gesperrt. Ebenfalls ist bei einer solchen Ausführungsform des Ausgangsstromrichters beim Ladebetrieb eine aufgrund der externen Eingangsspannung am Wechselrichter anstehende Spannung mittels der Freilaufdioden des Wechselrichters gleichrichtbar und wird beim Ladebetrieb gleichgerichtet. Mittels der resultierenden Gleichspannung wird beim Ladebetrieb die oder jede an den zweiten Strompfad des bidirektionalen Bordnetzumrichters angeschlossene Batterie geladen.

Beim Rückspeisebetrieb ist der Ausgangsstromrichter als Wechselrichter betreibbar beim Rückspeisebetrieb als Wechselrichter. Bei einer Halbleiterschalter und antiparallele Freilaufdioden umfassenden Ausführungsform des Ausgangsstromrichters ist mittels einer Taktung der Halbleiterschalter mit einer vorgegebenen oder vorgebbaren, insbesondere konstanten Schaltfrequenz aus der Batteriespannung eine Wechselspannung generierbar und wird beim Rückspeisebetrieb generiert.

Der erste Strompfad und der zweite Strompfad gehen von einer Sekundärseite eines von dem bidirektionalen Bordnetzumrichter umfassten Übertragers aus. Der zweite Strompfad von und zu der mindestens einen anschließbaren Batterie umfasst den Ausgangsstromrichter. Die mittels des Ausgangsstromrichters generierbare und mittels des Ausgangsstromrichters beim Rückspeisebetrieb generierte Wechselspannung gelangt mittels des Übertragers in den ersten Strompfad (die im zweiten Strompfad generierte Wechselspannung wird mittels des Übertragers in den ersten Strompfad eingespeist). Im ersten Strompfad gelangt die beim Rückspeisebetrieb generierte Wechselspannung und zu zumindest einem dort angeschlossenen Verbraucher und auf diese Weise ist dessen Versorgung mit elektrischer Energie auch bei einem Ausfall der externen Eingangsspannung gewährleistet.

Der Vorteil der Erfindung besteht darin, dass die Anzahl notwendiger Funktionseinheiten des bidirektionale Bordnetzumrichters reduziert ist, so dass sich der resultierende bidirektionale Bordnetzumrichter im Vergleich zu bekannten bidirektionalen Bordnetzumrichtern durch ein geringeres Gewicht, reduzierten Platz-/Raumbedarf und nicht zuletzt einen günstigeren Preis auszeichnet.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer besonderen Ausführungsform des bidirektionaler Bordnetzumrichters und einem Verfahren zu dessen Betrieb umfasst der Übertrager einen ersten Transformator und einen zweiten Transformator, wobei der erste und der zweite Transformator primärseitig parallel geschaltet sind und die beiden Transformatoren einen gemeinsamen Primärkreis umfassten, wobei sich an den ersten Transformator der erste Strompfad und an den zweiten Transformator der zweite Strompfad anschließt. Eine solche Ausführungsform eines Übertragers ist besonders zweckmäßig zur parallelen Einspeisung der aufgrund der externen Eingangsspannung resultierenden elektrischen Energie sowohl in den ersten Strompfad zur Versorgung des oder jedes dort angeschlossenen Verbrauchers wie auch in den zweiten Strompfad zum Laden der zumindest einen Batterie. Eine solche Ausführungsform eines Übertragers ist aber ebenso besonders zweckmäßig zur Einspeisung der elektrischen Energie aus dem zweiten Strompfad von der zumindest einen Batterie in den ersten Strompfad während des Rückspeisebetriebs und zur Versorgung dann noch zu betreibender Verbraucher.

Bei einer weiteren besonderen Ausführungsform des bidirektionaler Bordnetzumrichters umfasst dieser eine Batterieladeschaltung im zweiten Strompfad und im Anschluss an den Ausgangsstromrichter, wobei die Batterieladeschaltung einen Tiefsetz-/Hochsetzsteller umfasst, welcher beim Ladebetrieb als Tiefsetzsteller und beim Rückspeisebetrieb als Hochsetzsteller betreibbar ist. Bei einem Verfahren zum Betrieb eines solchen bidirektionaler Bordnetzumrichters wird der Tiefsetz-/Hochsetzsteller der Batterieladeschaltung beim Ladebetrieb als Tiefsetzsteller und beim Rückspeisebetrieb als Hochsetzsteller betrieben. Auf diese Weise ist gewährleistet, dass der zumindest einen Batterie beim Ladebetrieb eine mittels des Tiefsetz-/Hochsetzsteller in seiner Funktion als Tiefsetzsteller erzeugte, geeignete Gleichspannung zugeführt wird und dass dem Ausgangsstromrichter beim Rückspeisebetrieb ebenso eine mittels des Tiefsetz-/Hochsetzsteller, jetzt in seiner Funktion als Hochsetzsteller, erzeugte, geeignete Gleichspannung zugeführt wird.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen. Es zeigen:
- FIG 1: einen Bordnetzumrichter,
- FIG 2: eine Schaltung für einen Rückspeisebetrieb,
- FIG 3: einen Bordnetzumrichter gemäß dem hier vorgeschlagenen Ansatz,
- FIG 4: einen Stromwandler eines Bordnetzumrichters gemäß FIG 3 und
- FIG 5: eine bidirektionale Batterieladeschaltung eines Bordnetzumrichters gemäß FIG 3.

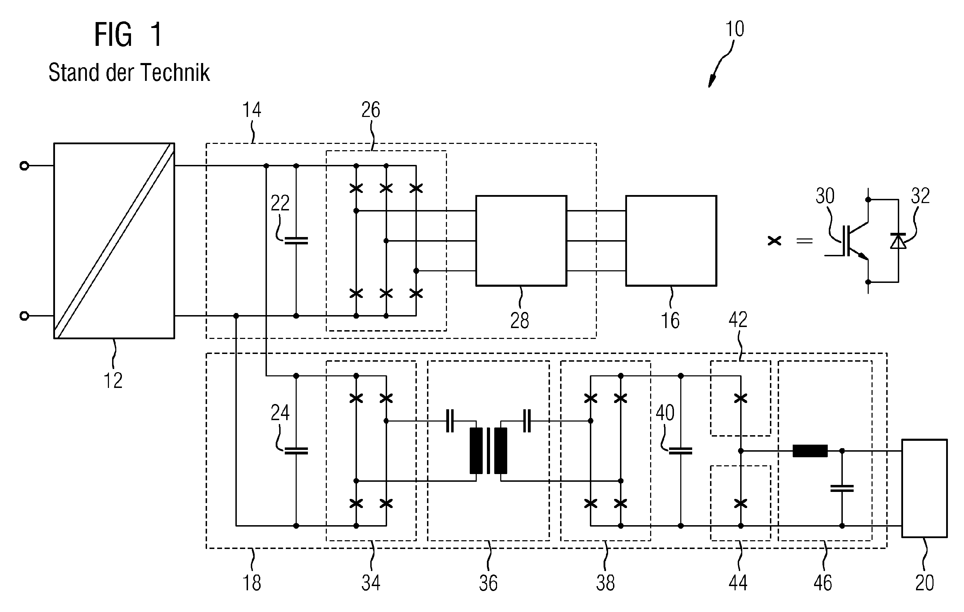

Die Darstellung in FIG 1 zeigt in Form eines Blockschaltbilds eine Prinzipdarstellung eines grundsätzlich bekannten bidirektionalen Bordnetzumrichters 10. Dieser ist mittels eines eingangsseitigen Stromwandlers 12 (AC/DC- oder DC/DC-Wandler) 12 an ein Gleichspannungs- oder Wechselspannungsnetz anschließbar und der Stromwandler 12 weist entsprechend einen Eingang auf, welcher je nach Eingangsspannung als AC-Eingang oder DC-Eingang fungiert. Auf einer Ausgangsseite des Stromwandlers 12 umfasst der bidirektionale Bordnetzumrichter 10 einen ersten Strompfad 14 zu zumindest einem anschließbaren Verbraucher 16 und einen zum ersten Strompfad 14 parallelen, zweiten Strompfad 18 von und zu zumindest einer anschließbaren Batterie 20.

Ausgangsseitig sind dem Stromwandler 12 im ersten sowie im zweiten Strompfad 14, 18 in jeweils einem eigenen Zwischenkreis ein Zwischenkreiskondensator 22, 24 nachgeschaltet.

Im ersten Strompfad 14 umfasst der im Folgenden mitunter auch nur kurz als Bordnetzumrichter 10 bezeichnete bidirektionale Bordnetzumrichter 10 im Anschluss an den dortigen Zwischenkreiskondensator 22 einen Pulsbreitenmodulations-Stromrichter 26 (3AC oder 1AC Pulswechselrichter 26) und wiederum im Anschluss daran ein Sinusfilter 28. An dessen Ausgängen sind eine einphasige Wechselspannung (1AC) und/oder eine dreiphasige Wechselspannung (3AC) abgreifbar. An das Sinusfilter 28 sind entsprechende Verbraucher 16, nämlich 1AC-Verbraucher oder 3AC-Verbraucher, anschließbar.

Im zweiten Strompfad 18 umfasst der Bordnetzumrichter 10 im Anschluss an den dortigen Zwischenkreiskondensator 24 einen mittelfrequenten Wechselrichter 34 und im Anschluss daran einen mittelfrequenter Übertrager 36 mit Serienresonanzkondensatoren. An diesen wiederum sind ein batterieseitiger mittelfrequenter Stromrichter 38, ein batterieseitiger Zwischenkreis mit einem Zwischenkreiskondensator 40, ein batterieseitiger Tiefsetzsteller (TSS) 42 und ein batterieseitiger Hochsetzsteller (HSS) 44 angeschlossen. Dem HSS 44 ist ein LC-Filter als Ausgangsfilter 46 nachgeschaltet. Dessen Ausgang fungiert als DC-Ausgang (für einen DC-Verbraucher; nicht gezeigt) und/oder als Batterie-Eingang.

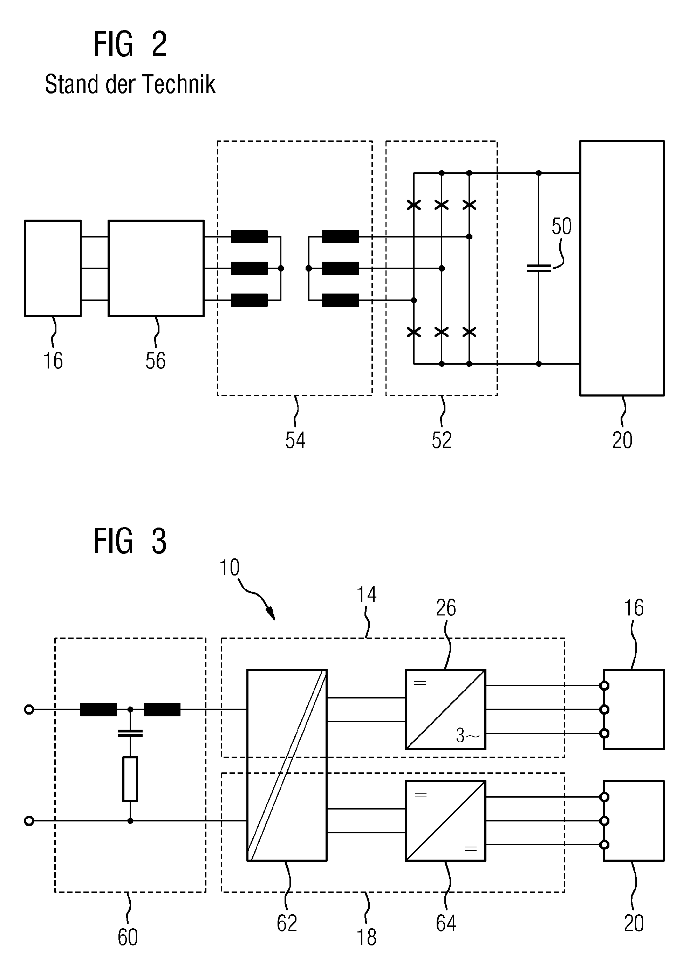

In den einzelnen Brückenpfaden des mitunter auch nur kurz als PWR 26 bezeichneten Pulswechselrichters 26, des Wechselrichters 34, des Stromrichter 38 sowie des TSS 42 und des HSS 44 sind die dortigen sogenannten Stromventile (Parallelschaltung jeweils eines Halbleiterschalters 30 und einer Freilaufdiode 32) nur in Form eines Kreuzes gezeigt. Auf der rechten Seite der Darstellung in FIG 1 ist ein einzelnes Stromventil mit weiteren Details gezeigt. Dieses umfasst in an sich bekannter Art einen Halbleiterschalter 30 und eine antiparallele Freilaufdiode 32. Diese Ersetzung wurde im Interesse der Übersichtlichkeit vorgenommen und gilt auch für die Darstellung in FIG 2.

Bei einer auf der Eingangsseite des Stromwandlers 12 anstehenden externen Eingangsspannung, beim Bahnbetrieb der sogenannten Fahrdrahtspannung, erfolgt über den ersten Strompfad 14 die Versorgung des oder jedes dort angeschlossenen Verbrauchers 16 und gleichzeitig wird über den zweiten Strompfad 18 die zumindest eine Batterie 20 geladen. Weil in dieser Betriebssituation die zumindest eine Batterie 20 geladen wird, wird die entsprechende Betriebsart des Bordnetzumrichters 10 als Ladebetrieb bezeichnet. Die Betriebsart des Bordnetzumrichters 10 bestimmt die Ansteuerung der Halbleiterschalter 30 im zweiten Strompfad 18.

Beim Ausfall der externen Eingangsspannung erfolgt die Versorgung zumindest einzelner Verbraucher 16 mittels der zumindest einen Batterie 20. Der Bordnetzumrichter 10 wird dann mittels einer entsprechenden Ansteuerung der Halbleiterschalter 30 in einer Art und Weise betrieben, welche die Versorgung zumindest einzelner Verbraucher 16 mit elektrischer Energie erlaubt. Die elektrische Energie wird aus der mindestens einen Batterie 20 bezogen und (entgegen der Stromflussrichtung beim Ladebetrieb) zurück in zweiten Strompfad 18 eingespeist, von wo die eingespeiste elektrische Energie über den ersten Strompfad 14 zu jedem beim Ausfall der externen Eingangsspannung noch zu versorgenden Verbraucher 16 gelangt. Aufgrund der Einspeisung der elektrischen Energie zurück in den Bordnetzumrichter 10 wird diese Betriebsart Rückspeisebetrieb genannt. Auch diese Ansteuerung der Halbleiterschalter 30 ist durch eine charakteristische Ansteuerung der Halbleiterschalter 30 im zweiten Strompfad 18 bestimmt.

Die Darstellung in FIG 2 zeigt eine weitere bekannte Schaltung für einen Rückspeisebetrieb aus einer Batterie 20. Über einen Zwischenkreiskondensator 50 ist ein 3AC- oder 1AC-Pulswechselrichter (PWR) 52 an die Batterie 20 angeschlossen. In einem Strompfad zu einem oder mehreren Verbrauchern 16, nämlich 1AC-Verbrauchern 16 oder 3AC-Verbrauchern 16, befinden sich auf der Ausgangsseite der Batterie 20 und im Anschluss an den PWR 52 ein niederfrequenter dreiphasiger Transformator 54, insbesondere in einer Ausführungsform als 50Hz/60Hz Transformator 54, und wiederum im Anschluss daran ein Sinusfilter 56. Der oder jeder Verbraucher 16 ist an das Sinusfilter 56 angeschlossen. Eine mit einer Schaltung gemäß FIG 2 realisierte Batterie-PWR-Transformator-Anlage ist sehr schwer, groß und teuer. Der für eine solche Anlage benötigte Platz steht nicht immer zur Verfügung.

Die Darstellung in FIG 3 zeigt eine Ausführungsform eines bidirektionalen Bordnetzumrichters 10 und eine bidirektionale Bordnetzumrichterschaltung gemäß dem hier vorgeschlagenen Ansatz. Auch dieser bidirektionale Bordnetzumrichter 10 wird im Folgenden mitunter auch nur kurz als Bordnetzumrichter 10 bezeichnet.

Eingesetzt wird ein solcher Bordnetzumrichter 10 zum Beispiel im Bahnbetrieb. Dort formt er die Fahrdrahtspannung in eine potentialgetrennte 3xAC Ausgangsspannung (z. B. 3AC 280V/60Hz, 400V/50Hz und 480V/60Hz) und eine potentialgetrennte DC Ausgangsspannung (z. B. DC 24V, 36V und 110V) um und dient zur Versorgung der 1AC und 3AC Verbraucher 16 (z. B. Kompressor, Lüfter, usw.), zum Laden der Wagen-Batterie 20 und zur Versorgung angeschlossener DC-Verbraucher.

Der Bordnetzumrichter 10 übernimmt beim Ausfall der eingangsseitig anliegenden Speisespannung, beim Einsatz im Bahnbetrieb also beim Ausfall des Bahnnetzes und der Fahrdrahtspannung, die elektrische Versorgung zumindest einzelner Verbraucher 16. Dafür entnimmt der Bordnetzumrichter 10 beim Ausfall der externen Eingangsspannung die benötigte elektrische Energie aus zumindest einer Batterie 20 (üblicherweise einer Gruppe von Batterien 20; beim Bahnbetrieb aus den jeweiligen Wagen-Batterien 20). Die Spannung der zumindest einen Batterie 20 wird in eine potentialgetrennte 3AC Spannung umgeformt, um notwendige 3AC Verbraucher 16, wie z. B. Kompressor, Lüfter, usw., auch während des Ausfalls der externen Speisespannung weiter versorgen zu können (Rückspeisebetrieb).

Ausgehend von der Eingangsseite zur Zuführung einer externen Eingangsspannung umfasst auch der Bordnetzumrichter 10 gemäß FIG 3 - ebenso wie der Bordnetzumrichter 10 gemäß FIG 1 - einen ersten Strompfad 14 und einen zweiten Strompfad 18. Der erste Strompfad 14 führt zu einer Anschlussstelle für zumindest einen Verbraucher 16 und beim Betrieb des Bordnetzumrichters 10 zu zumindest einem angeschlossenen Verbraucher 16. Der zweite Strompfad 18 verläuft parallel zum ersten Strompfad 14 und führt zu zumindest einer beim Betrieb des Bordnetzumrichters 10 angeschlossenen Batterie 20. Ansonsten umfasst der Bordnetzumrichter 10 bei der Betrachtung des in FIG 3 gezeigten Blockschaltbilds ein noch vor der Verzweigung der beiden Strompfade 14, 18 befindliches Eingangsfilter 60, im Anschluss an das Eingangsfilter 60 einen Stromwandler 62 (AC/DC- oder DC/DC-Wandler) mit Potentialtrennung, von dem die beiden Strompfade 14, 18 ausgehen, einen Pulsbreitenmodulations-Stromrichter (PWR) 26 im ersten Strompfad 14 und eine bidirektionales Batterieladeschaltung 64 im zweiten Strompfad 18.

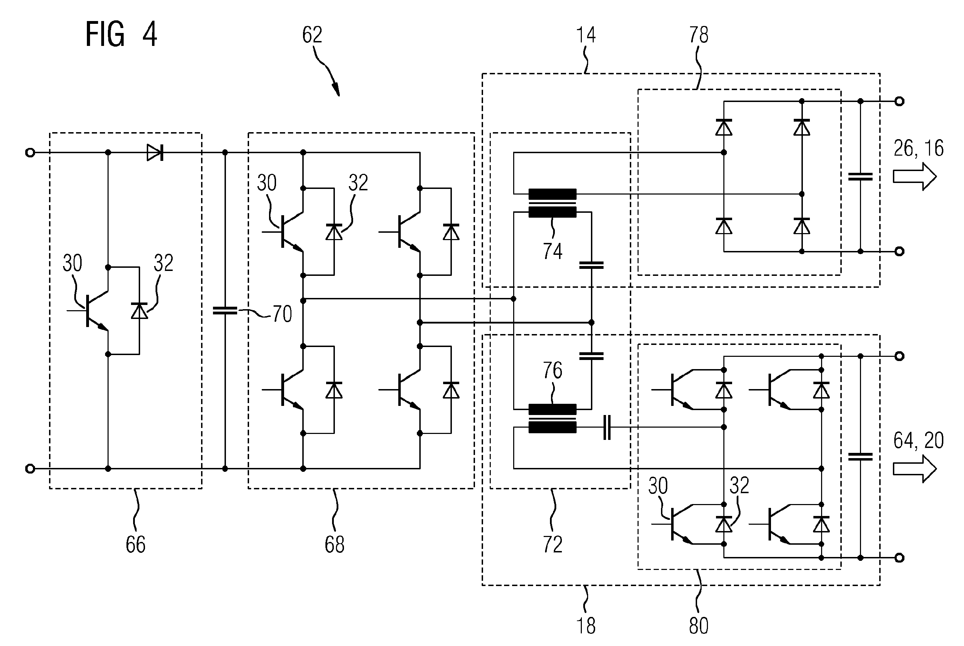

Die Darstellung in FIG 4 zeigt in Form eines Blockschaltbilds eine Ausführungsform eines Stromwandlers 62 des Bordnetzumrichters 10 gemäß FIG 3 mit weiteren Details. Bei der gezeigten Ausführungsform umfasst der Stromwandler 62 einen Hochsetzsteller (HSS) 66, einen mittelfrequenten Wechselrichter 68 mit vorgeschaltetem Zwischenkreiskondensator 70 sowie einen Übertrager 72, insbesondere einen Mittelfrequenz-Übertrager (MF-Übertrager), mit Serienresonanzkondensatoren. Der Übertrager 72 umfasst einen ersten Transformator 74 sowie einen zweiten Transformator 76. Der erste und der zweite Transformator 74, 76 sind primärseitig parallel geschaltet und weisen demnach einen gemeinsamen Primärkreis auf. Der erste Transformator 74 bildet den Beginn des ersten Strompfads 14 zu einer Anschlussstelle für dort anschließbare Verbraucher 16. Der zweite Transformator 76 bildet den Beginn des zweiten Strompfads 18 von und zur zumindest einen Batterie 20.

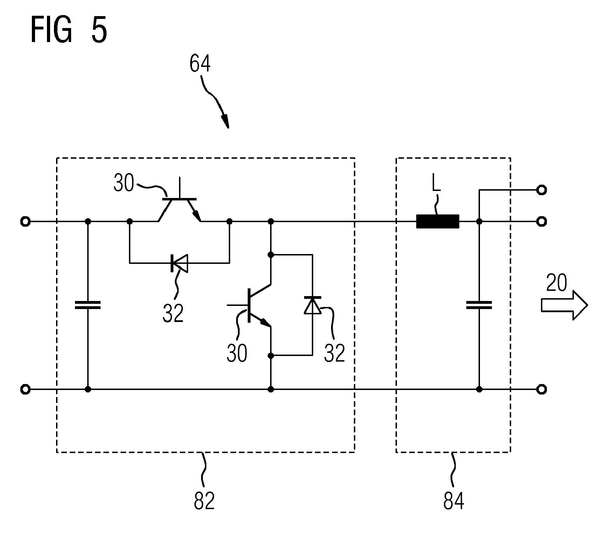

An den ersten Transformator 74 ist ein als Ausgangsgleichrichter 78 fungierender Gleichrichter und an diesen wiederum der PWR 26 (FIG 3) und ein Verbraucher 16 oder mehrere Verbraucher 16 angeschlossen. An den zweiten Transformator 76 ist ein Ausgangsstromrichter 80 und an diesen wiederum die bidirektionale Batterieladeschaltung 64 (FIG 3; FIG 5) und die zumindest eine Batterie 20 angeschlossen.

Für einen als AC/DC Wandler ausgeführten Stromwandler 62 ist eine B2-Dioden-Brückenschaltung am Eingang des HSS 66 vorzusehen.

Der HSS 66 (FIG 4) setzt die Eingangsspannung mit großem Spannungsbereich auf eine konstante Spannung im Zwischenkreis (Zwischenkreiskondensator 70) hoch. Der Wechselrichter 68 (FIG 4) umfasst Halbleiter-Vollbrücken. Dessen Halbleiterschalter 30, insbesondere IGBTs, werden mit einer vorgegebenen oder vorgebbaren, insbesondere konstanten Schaltfrequenz angesteuert und erzeugen eine Wechselspannung auf einer Eingangsseite des Übertragers 72 und damit auf der Primärseite der davon umfassten Transformatoren 74, 76.

An den ersten Transformator 74 ist im ersten Strompfad 14 über den Ausgangsgleichrichter 78 im Weiteren der PWR 26 angeschlossen. Deshalb wird der erste Transformator 74 auch als PWR-Übertrager 74 bezeichnet. An den zweiten Transformator 76 ist im zweiten Strompfad 18 über den Ausgangsstromrichter 80 im Weiteren die bidirektionale Batterieladeschaltung 64 angeschlossen. Deshalb wird der zweite Transformator 76 zur Unterscheidung auch als Batterieladeschaltungsübertrager oder kurz als Batterie-Übertrager 76 bezeichnet. Der PWR-Übertrager 74 und der Batterie-Übertrager 76 sind primärseitig am Ausgang des Wechselrichters 68 parallel angeschlossen. In den Primärkreisen der Übertrager 74, 76 (PWR-Übertrager 74 und Batterie-Übertrager 76) ist je ein Kondensator in Reihe zur jeweiligen Primärwicklung geschaltet. Im Sekundärkreis des Batterie-Übertragers 76 ist in Reihe zu dessen Sekundärwicklung ein Kondensator geschaltet.

Die Sekundärspannung des PWR-Übertragers 74 wird über den Ausgangsgleichrichter 78 gleichgerichtet. Der PWR 26 pulsmoduliert die resultierende Gleichspannung und erzeugt eine geforderte sinusförmige 3AC Ausgangsspannung zur Versorgung des oder jedes angeschlossenen Verbrauchers 16.

An der Sekundärseite des Batterie-Übertragers 76 ist als Ausgangsstromrichter 80 eine Halbleiter-Vollbrücke angeschlossen. Bei normalem Ladebetrieb (Speisung mittels der externen Speisespannung, insbesondere Fahrdrahtspannung) sind dessen Halbleiterschalter 30, insbesondere Halbleiterschalter 30 in Form von IGBTs, gesperrt. Die Sekundärspannung des Batterie-Übertragers 76 wird dann mittels der Freilaufdioden 28 der Vollbrückenschaltung des Ausgangsstromrichters 80 gleichgerichtet und der Ausgangsstromrichter 80 fungiert als Gleichrichter.

Die Darstellung in FIG 5 zeigt in Form eines Blockschaltbilds eine Ausführungsform einer bidirektionalen Batterieladeschaltung 64 des Bordnetz-Umrichters 10 gemäß FIG 3 mit weiteren Details. Danach umfasst diese einen Tiefsetz-/Hochsetzsteller (TSS/HSS) 82 und ein Ausgangsfilter 84 (DC-Ausgangsfilter in einer Ausführung als LC-Filter). Der TSS/HSS 82 arbeitet im normalen Ladebetrieb (Speisung mittels der externen Speisespannung, insbesondere Fahrdrahtspannung) als Tiefsetzsteller und bewirkt eine Umsetzung der vom des Ausgangsstromrichter 80 aufgrund der gesperrten Halbleiterschalter 30 ausgegebenen Gleichspannung auf ein zum Laden der zumindest einen Batterie 20 taugliches Spannungsniveau. Durch eine bei einem Ausgangsfilter 84 in Form eines LC-Filters am Ausgang befindliche Drossel und einen Kondensator wird die resultierende DC-Ausgangsspannung geglättet.

Beim Rückspeisebetrieb aus der Batterie 20 (Ausfall der externen Speisespannung, Versorgung zumindest einzelner Verbraucher 16 mittels der Batteriespannung) arbeitet der TSS/HSS 82 der bidirektionalen Batterieladeschaltung 64 als Hochsetzsteller und setzt die an der zumindest einen Batterie 20 abgreifbare Gleichspannung (DC-Batteriespannung) auf eine konstante Spannung hoch. Die Halbleiterschalter 30 des Ausgangsstromrichters 80 (FIG 4) takten mit einer vorgegebenen oder vorgebbaren, insbesondere konstanten Schaltfrequenz und erzeugen eine Wechselspannung auf der Sekundärseite des Batterie-Übertragers 76. Beim Rückspeisebetrieb fungiert der Ausgangsstromrichter 80 demnach als Wechselrichter. Über die parallel geschalteten Primärwicklungen der Übertrager 74, 76 (PWR-Übertrager 74 und Batterie-Übertrager 76) gelangen die erzeugte Wechselspannung und deren elektrische Energie direkt auf die Sekundärseite des PWR-Übertragers 74. Die Sekundärspannung des PWR-Übertragers 74 wird mittels des Ausgangsgleichrichters 78 gleichgerichtet und der PWR 26 pulsmoduliert die resultierende Gleichspannung und erzeugt die sinusförmige 3AC Ausgangsspannung zum Betrieb zumindest einzelner Verbraucher 16 mittels der Spannung der zumindest einen Batterie 20 während des Rückspeisebetriebs.

Die Ansteuerung der Halbleiterschalter 30 zur Umschaltung des Ausgangsstromrichters 80 zwischen seiner Funktion als Gleichrichter im Ladebetrieb und seiner Funktion als Wechselrichter beim Rückspeisebetrieb erfolgt mittels einer dafür vorgesehenen Steuereinheit (nicht gezeigt), welche entsprechende Steuersignale für die Halbleiterschalter 30 generiert und ausgibt. Die Steuereinheit erzeugt auch Steuersignale für die anderen Funktionseinheiten des Bordnetzumrichters 10, welche ansteuerbare Halbleiterschalter 30 umfassen, nämlich den HSS 66, den Wechselrichter 68 und den TSS/HSS 82. Der Vorteil des hier vorgestellten Ansatzes besteht auch darin, dass die Funktion einer solchen Steuereinheit im Vergleich zu einer Steuereinheit für einen Bordnetzumrichter 10 gemäß FIG 1 kaum Änderungen erfordert.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein bidirektionaler Bordnetzumrichter 10 mit einer Eingangsseite zur Zuführung einer externen Eingangsspannung, einem ersten Strompfad 14 zu zumindest einem anschließbaren Verbraucher 16, einem zum ersten Strompfad 14 parallelen zweiten Strompfad 18 von und zu zumindest einer anschließbaren Batterie 20 und einem Ausgangsstromrichter 80 im zweiten Strompfad 18, sowie ein Verfahren zum Betrieb eines solchen bidirektionaler Bordnetzumrichters 10. Der Ausgangsstromrichter 80 ist bei einem Ladebetrieb des bidirektionalen Bordnetzumrichters 10 zum Laden der zumindest einen Batterie 20 mittels der externen Eingangsspannung als Gleichrichter und bei einem Rückspeisebetrieb des bidirektionalen Bordnetzumrichters 10 zur Energieversorgung zumindest einzelner Verbraucher 16 mittels der zumindest einen Batterie 20 als Wechselrichter betreibbar. Der erste und der zweite Strompfad 14, 18 gehen von einer Sekundärseite eines Übertragers 72 ausgehen, wobei sich der Ausgangsstromrichter 80 im zweiten Strompfad 18 im Anschluss an den Übertrager 72 befindet und wobei beim Rückspeisebetrieb mittels des Ausgangsstromrichters 80 eine Wechselspannung generierbar und beim Betrieb des bidirektionalen Bordnetzumrichters 10 generiert wird, welche mittels des Übertragers 72 in den ersten Strompfad 14 einspeisbar ist und beim Betrieb des bidirektionalen Bordnetzumrichters 10 in den ersten Strompfad 14 eingespeist wird und zu zumindest einem dort angeschlossenen Verbraucher 16 gelangt.

## Patentansprüche

1. Bidirektionaler Bordnetzumrichter (10) mit einer Eingangsseite zur Zuführung einer externen Eingangsspannung,
- einem ersten Strompfad (14) zu zumindest einem anschließbaren Verbraucher (16) und einem zum ersten Strompfad (14) parallelen zweiten Strompfad (18) von und zu zumindest einer anschließbaren Batterie (20) sowie
- einem Ausgangsstromrichter (80) im zweiten Strompfad (18),
- wobei der Ausgangsstromrichter (80) bei einem Ladebetrieb des Bordnetzumrichters (10) zum Laden der zumindest einen Batterie (20) mittels der externen Eingangsspannung als Gleichrichter und bei einem Rückspeisebetrieb des Bordnetzumrichters (10) zur Energieversorgung zumindest einzelner Verbraucher (16) mittels der zumindest einen Batterie (20) als Wechselrichter betreibbar ist,
**dadurch gekennzeichnet,**
- **dass** der erste und zweite Strompfad (14, 18) von einer Sekundärseite eines Übertragers (72) ausgehen,
- **dass** sich der Ausgangsstromrichter (80) im zweiten Strompfad (18) im Anschluss an den Übertrager (72) befindet und
- **dass** beim Rückspeisebetrieb mittels des Ausgangsstromrichters (80) eine Wechselspannung generierbar ist, welche mittels des Übertragers (72) in den ersten Strompfad (14) und zu zumindest einem dort angeschlossenen Verbraucher (16) gelangt.

2. Bidirektionaler Bordnetzumrichter (10) nach Anspruch 1, wobei der Übertrager (72) einen ersten Transformator (74) und einen zweiten Transformator (76) umfasst,
wobei der erste und der zweite Transformator (74,76) primärseitig parallel geschaltet sind und die beiden Transformatoren (74,76) einen gemeinsamen Primärkreis umfassten,
wobei sich an den ersten Transformator (74) der erste Strompfad (14) anschließt und
wobei sich an den zweiten Transformator (76) der zweite Strompfad (18) anschließt.

3. Bidirektionaler Bordnetzumrichter (10) nach Anspruch 1 oder 2, mit einer Batterieladeschaltung (64) im zweiten Strompfad (18) und im Anschluss an den Ausgangsstromrichter (80),
wobei die Batterieladeschaltung (64) einen Tiefsetz-/Hochsetzsteller (82) umfasst, welcher beim Ladebetrieb als Tiefsetzsteller und beim Rückspeisebetrieb als Hochsetzsteller betreibbar ist.

4. Bidirektionaler Bordnetzumrichter (10) nach einem der vorangehenden Ansprüche,
wobei der Ausgangsstromrichter (80) Halbleiterschalter (30) und zu den Halbleiterschaltern (30) antiparallel Freilaufdioden (32) umfasst,
wobei beim Ladebetrieb die vom Ausgangsstromrichter (80) umfassten Halbleiterschalter (30) sperrbar sind und eine aufgrund der externen Eingangsspannung am Ausgangsstromrichter (80) anstehende Spannung mittels der vom Ausgangsstromrichter (80) umfassten Freilaufdioden (32) gleichrichtbar ist und wobei beim Rückspeisebetrieb mittels einer Taktung der Halbleiterschalter (30) des Ausgangsstromrichters (80) mit einer vorgegebenen oder vorgebbaren Schaltfrequenz aus einer über der mindestens einen Batterie (20) abgreifbaren Batteriespannung eine Wechselspannung generierbar ist, welche mittels des Übertragers (72) in den ersten Strompfad (14) einspeisbar ist.

5. Verfahren zum Betrieb eines bidirektionalen Bordnetzumrichters (10) nach einem der vorangehenden Ansprüche,
wobei beim Ladebetrieb des Bordnetzumrichters (10) zum Laden der zumindest einen Batterie (20) der Ausgangsstromrichter (80) als Gleichrichter fungiert und eine aufgrund der externen Eingangsspannung am Ausgangsstromrichter (80) anstehende Spannung gleichgerichtet wird und
wobei beim Rückspeisebetrieb des Bordnetzumrichters (10) zur Energieversorgung zumindest einzelner Verbraucher (16) der Ausgangsstromrichter (80) als Wechselrichter fungiert und aus einer über der mindestens einen Batterie (20) abgreifbaren Batteriespannung eine Wechselspannung generiert wird, welche mittels des Übertragers (72) in den ersten Strompfad (14) und zu zumindest einem dort angeschlossenen Verbraucher (16) gelangt.

6. Verfahren nach Anspruch 5 zum Betrieb eines Bordnetzumrichters (10) nach einem der Ansprüche 2 oder 3,
wobei beim Rückspeisebetrieb die aufgrund der Batteriespannung generierte Wechselspannung mittels des Übertragers (72) in den ersten Strompfad (14) und zu zumindest einem dort angeschlossenen Verbraucher (16) gelangt, indem der Übertrager (72) den ersten Transformator (74) und den primärseitig zum ersten Transformator (74) parallel geschalteten zweiten Transformator (76) umfasst,
wobei die generierte Wechselspannung in den gemeinsamen Primärkreis der beiden Transformatoren (74,76) eingespeist wird und von dort mittels des zweiten Transformators (76) in den ersten Strompfad (14) gelangt.

7. Verfahren nach Anspruch 5 oder 6 zum Betrieb eines Bordnetzumrichters (10) nach Anspruch 3,
wobei der Tiefsetz-/Hochsetzsteller (82) der Batterieladeschaltung (64) beim Ladebetrieb als Tiefsetzsteller und beim Rückspeisebetrieb als Hochsetzsteller betrieben wird.
